# EUROPEAN PATENT APPLICATION

(11) **EP 3 493 130 A1**
(43) Date of publication of application: **05.06.2019**
(21) Application number: 18207703.2
(22) Date of filing: 22.11.2018
(51) Int. Cl.: G06Q 10/10

(54) **IMAGE PROCESSING METHOD, IMAGE PROCESSING DEVICE, COMPUTER DEVICE, AND COMPUTER READABLE STORAGE MEDIUM**

(30) Priority: 30.11.2017 CN 201711240776
(71) Applicant: GUANGDONG OPPO MOBILE TELECOMMUNICATIONS CORP., LTD., Dongguan, Guangdong 523860 (CN)
(72) Inventor: KE, Xiuhua, Dongguan, Guangdong 523860 (CN); SHU, Jian, Dongguan, Guangdong 523860 (CN)
(74) Representative: Manitz Finsterwald Patent- und Rechtsanwaltspartnerschaft mbB

(57) **Abstract**

Embodiments of the present disclosure provide an image processing method, an image processing device, a computer device and a computer readable storage medium. The method includes the followings. Image information of a plurality of images to be processed is acquired. A first classification is performed on the plurality of images to be processed based on the image information to acquire at least one first image set. A second classification is performed on images in each of the at least one first image set based on a preset classification rule, to acquire at least one second image set corresponding to each of the at least one first image set. The at least one second image set corresponding to each of the at least one first image set is displayed on an interface of a computer device.

## Description

### TECHNICAL FIELD

The present disclosure relates to a field of computer technologies, and more particularly, to an image processing method, an image processing device, a computer device and a computer readable storage medium.

### BACKGROUND

A user may capture images by an intelligent electronic device. The intelligent electronic device may classify the captured images. In general, the intelligent electronic device may classify the images based on capturing time of each image, classify the images based on a capturing location of each image, and also classify the images based on one or more faces in each image.

### SUMMARY

Embodiments of the present disclosure provide an image processing method, an image processing device, a computer device, and a computer readable storage medium, which may perform multi-level classification on images.

An image processing method includes the following. Image information of a plurality of images to be processed is acquired. The image information includes at least one of time information, location information, person information, and scene information. A first classification is performed on the plurality of images to be processed based on the image information to acquire at least one first image set. A second classification is performed on images in each of the at least one first image set based on a preset classification rule, to acquire at least one second image set corresponding to each of the at least one first image set. The at least one second image set corresponding to each of the at least one first image set is displayed on an interface of a computer device.

In one or more embodiments, displaying the at least one second image set corresponding to each of the at least one first image set on the interface of the computer device, includes at least one of: acquiring a number of images in each of the at least one second image set, and displaying the at least one second image set in an ascending or descending order of the number of images; or acquiring a total number of browsing times of each of the at least one second image set, and displaying the at least one second image set in an ascending or descending order of the total number of browsing times; or acquiring a modification time of each of the at least one second image set, and displaying the at least one second image set in an order of the modification time from earliest to latest or from latest to earliest.

In one or more embodiments, displaying the at least one second image set corresponding to each of the at least one first image set on the interface of the computer device includes: acquiring an image with the highest number of browsing times in each of the at least one second image set as a corresponding cover image, and displaying the cover images on the interface of the computer device.

In one or more embodiments, the method includes: displaying a keyword corresponding to each of the at least one second image set on the interface of the computer device; receiving an image search instruction; extracting a search term from the image search instruction; performing matching of the search term and the keyword; and when the search term matches the keyword, displaying images in a second image set corresponding to the keyword on the interface of the computer device.

In one or more embodiments, performing the second classification on the images in each of the at least one first image set based on the preset classification rule, to acquire the at least one second image set corresponding to each of the at least one first image set, includes: acquiring a first dimension for performing the first classification on the plurality of images to be processed; selecting a second dimension from a preset dimension set, the second dimension being different from the first dimension; and performing the second classification on the images in each of the at least one first image set based on the second dimension.

In one or more embodiments, selecting the second dimension from the preset dimension set, includes: selecting the second dimension from the preset dimension set, in which a type of the first dimension is different from a type of the second dimension; or selecting the second dimension from the preset dimension set, a type of the first dimension is same with a type of the second dimension, and a clustering precision of the first dimension is different from a clustering precision of the second dimension.

In one or more embodiments, the method further includes: when the second image set is a face image set, performing face recognition on each image in the second image set to acquire a face in each image in the second image set; and when a number of images having a plurality of same faces exceeds a second threshold, clustering the image having the plurality of same faces into a third image set.

An image processing device includes an acquiring module, a first classification module, a second classification module, and a displaying module. The acquiring module is configured to acquire image information of a plurality of images to be processed, the image information including at least one of time information, location information, person information, and scene information. The first classification module is configured to perform a first classification on the plurality of images to be processed based on the image information to acquire at least one first image set. The second classification module is configured to perform a second classification on images in each of the at least one first image set based on a preset classification rule, to acquire at least one second image set corresponding to each of the at least one first image set. The displaying module is configured to display the at least one second image set corresponding to each of the at least one first image set on an interface of a computer device.

In one or more embodiments, the displaying module is configured to display the at least one second image set corresponding to each of the at least one first image set on the interface of the computer device, by actions of: acquiring a number of images in each of the at least one second image set, and displaying the at least one second image set in an ascending or descending order of the number of images; or acquiring a total number of browsing times of each of the at least one second image set, and displaying the at least one second image set in an ascending or descending order of the total number of browsing times; or acquiring a modification time of each of the at least one second image set, and displaying the at least one second image set in an order of the modification time from earliest to latest or from latest to earliest.

In one or more embodiments, the displaying module is configured to display the at least one second image set corresponding to each of the at least one first image set on the interface of the computer device, by actions of: acquiring an image with the highest number of browsing times in each of the at least one second image set as a corresponding cover image, and displaying the cover images on the interface of the computer device.

In one or more embodiments, the displaying module is configured to display a keyword corresponding to each of the at least one second image set on the interface of the computer device, and the device further includes a receiving module and a matching module. The receiving module is configured to receive an image search instruction, and extract a search term from the image search instruction. The matching module is configured to perform matching of the search term and the keyword. The displaying module is further configured to, when the search term matches the keyword, display images in a second image set corresponding to the keyword on the interface of the computer device.

In one or more embodiments, the second classification module is configured to perform the second classification on the images in each of the at least one first image set based on the preset classification rule, to acquire the at least one second image set corresponding to each of the at least one first image set, by actions of: acquiring a first dimension for performing the first classification on the plurality of images to be processed; selecting a second dimension from a preset dimension set, the second dimension being different from the first dimension; and performing the second classification on the images in each of the at least one first image set based on the second dimension.

In one or more embodiments, selecting the second dimension from the preset dimension set, includes: selecting the second dimension from the preset dimension set, in which a type of the first dimension is different from a type of the second dimension; or selecting the second dimension from the preset dimension set, a type of the first dimension is same with a type of the second dimension, and a clustering precision of the first dimension is different from a clustering precision of the second dimension.

In one or more embodiments, the device is further configured to: when the second image set is a face image set, perform face recognition on each image in the second image set to acquire a face in each image in the second image set; and when a number of images having a plurality of same faces exceeds a second threshold, cluster the image having the plurality of same faces into a third image set.

A computer readable storage medium having stored computer programs thereon. When the computer programs are executed by a processor, actions in the above method are implemented.

### BRIEF DESCRIPTION OF THE DRAWINGS

To clearly illustrate embodiments of the present disclosure or technical solutions in the prior art, a brief description of drawings used in embodiments or in the prior art descriptions is given below. Obviously, the drawings in the following descriptions are only part embodiments of the present disclosure, and for those skilled in the art, other drawings can be obtained according to these drawings without creative labor.
Fig. 1 is a schematic diagram illustrating an application scenario of an image processing method according to an embodiment of the present disclosure.
Fig. 2 is a flow chart illustrating an image processing method according to an embodiment of the present disclosure.
Fig. 3 is a schematic diagram illustrating displaying a first image set on a surface of a computer device according to an embodiment of the present disclosure.
Fig. 4 is a schematic diagram illustrating displaying a second image set on a surface of a computer device according to an embodiment of the present disclosure.
Fig. 5 is a flow chart illustrating an image processing method according to another embodiment of the present disclosure.

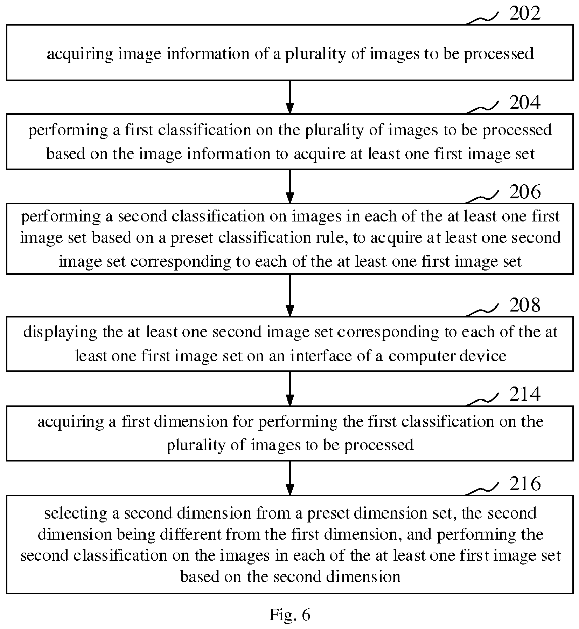

Fig. 6 is a flow chart illustrating an image processing method according to another embodiment of the present disclosure.
Fig. 7 is a flow chart illustrating an image processing method according to another embodiment of the present disclosure.
Fig. 8 is a block diagram illustrating an image processing device according to an embodiment of the present disclosure.
Fig. 9 is a block diagram illustrating an image processing device according to another embodiment of the present disclosure.
Fig. 10 is a block diagram illustrating a part of a structure of a mobile phone related to a computer device according to an embodiment of the present disclosure.

### DETAILED DESCRIPTION

To make objects, technical solutions, and advantages of the present disclosure more comprehensible, the present disclosure will be further described in detail below with reference to accompanying drawings and embodiments. It should be understood that specific embodiments described herein are merely illustrative of the present disclosure and are not intended to limit the present disclosure.

The present disclosure relates to an image processing method including the following. Image information of a plurality of images to be processed is acquired. The image information includes at least one of time information, location information, person information, and scene information. A first classification is performed on the plurality of images to be processed based on the image information to acquire at least one first image set. A second classification is performed on images in each of the at least one first image set based on a preset classification rule, to acquire at least one second image set corresponding to each of the at least one first image set. The at least one second image set corresponding to each of the at least one first image set is displayed on an interface of a computer device.

The present disclosure relates to an image processing device including an acquiring module, a first classification module, a second classification module and a displaying module. The acquiring module is configured to acquire image information of a plurality of images to be processed. The image information includes at least one of time information, location information, person information, and scene information. The first classification module is configured to perform a first classification on the plurality of images to be processed based on the image information to acquire at least one first image set. The second classification module is configured to perform a second classification on images in each of the at least one first image set based on a preset classification rule, to acquire at least one second image set corresponding to each of the at least one first image set. The displaying module is configured to display the at least one second image set corresponding to each of the at least one first image set on an interface of a computer device.

The present disclosure relates to a computer device including a memory and a processor. The memory is configured to store computer readable instructions. The processor is configured to execute the instructions to perform actions in the above method.

The present disclosure relates to a computer readable storage medium having stored computer programs thereon. When the computer programs are executed by a processor, actions in the above method are implemented.

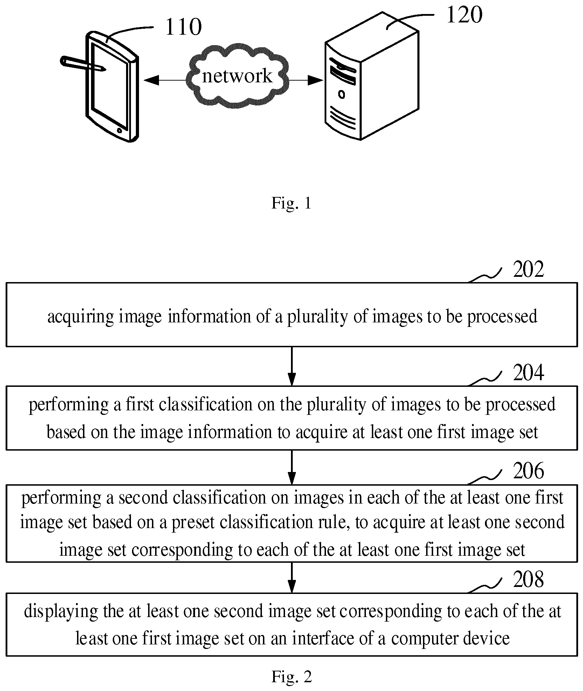

Fig. 1 is a schematic diagram illustrating an application scenario of an image processing method according to an embodiment of the present disclosure. As illustrated in Fig. 1, a computer device 110 and a server 120 may communicate with each other over a network connection. The computer device 110 may perform multi-level classification on stored images. The multi-level classification may include multi-level classification on the same dimension, or multi-level classification on different dimensions. For example, the computer device 110 may classify the images based on a time dimension to acquire one or more image sets and classify images in each of the one or more image sets based on a location dimension. The computer device 110 may synchronize the stored images to the server 120. The server 120 may perform multi-level classification on the received images and transmit a multi-level classification result to the computer device 110. The server 120 may also receive the classification result uploaded by the computer device 110, and update the classification of the stored images according to the classification result uploaded by the computer device 110. That is, both the computer device 110 and the server 120 may perform the multi-level classification on the images. When the classification result is synchronized between the computer device 110 and the server 120, if the classification of the images involves a manual operation of the user, the classification result after the manual operation by the user shall prevail; and if the classification of the images does not involve a manual operation of the user, the classification result of the server 120 shall prevail.

Fig. 2 is a flow chart illustrating an image processing method according to an embodiment of the present disclosure. As illustrated in Fig. 2, the image processing method may include actions in the following blocks.

At block 202, image information of a plurality of images to be processed is acquired. The image information includes at least one of time information, location information, person information, and scene information.

After acquiring the plurality of images to be processed, the computer device may further acquire the image information of the plurality of images to be processed. The plurality of images to be processed described herein include images that have been stored in the computer device. The image information includes the time information, the location information, the person information, and the scene information. The time information refers to a moment when the image is captured. The location information refers to a location where the image is captured. The person information refers to face information in the image. The scene information refers to a scene corresponding to the image. The scene corresponding to the image may include: animal, plant, cate, building, landscape, etc.

The computer device may record the moment of capturing the image when the image is captured, and stores the moment of capturing the image into an image file. The computer device may directly acquire the time information of the image from the image file. When the computer device captures the image, if the computer device has a positioning function, such as a GPS (Global Positioning System), the computer device may record current positioning information into the stored image file accordingly, and the computer device may acquire the location information of the image by querying the image file. The above location information may be represented by a geographic coordinate system, a place name or coordinate points on a map. The computer device may acquire the face information in the image by a face recognition algorithm. In detail, it is detected whether there is a face in the image. A face identifier corresponding to the face is acquired when there is the face in the image. The face identifier is a string for uniquely identifying the face, which may be numbers, letters, symbols, etc. The computer device may identify the scene information corresponding to the image through a scene recognition model. The scene recognition model may be a decision model established in advance through machine learning. When establishing the decision model, a large number of sample images may be acquired. The sample images include images of various scenes, such as animal images, plant images, cate images, building images, landscape images, etc. The scene corresponding to each sample image may be marked. The marked sample images may be taken as an input of the decision model, and the scene recognition model may be acquired through machine learning training on the decision model.

At block 204, a first classification is performed on the plurality of images to be processed based on the image information to acquire at least one first image set.

After acquiring the image information of the plurality of images to be processed, the first classification may be performed on the plurality of images to be processed. In addition to the first classification, the computer device may perform a second classification, a third classification..., a n^{-th} classification. A scope of the first classification is larger than that of the second classification, a scope of the second classification is larger than that of the third classification, and so on. That is, the former classification is the parent classification of the latter classification, and the latter classification is the child classification of the former classification.

The computer device may store a classification rule corresponding to each classification in advance. When the computer device performs the first classification on the plurality of images to be processed, the pre-stored first classification rule may be acquired. Each kind of information in the image information may correspond to the first classification rule. For example, the first classification rule corresponding to the time information may be that the plurality of images to be processed may be classified into different groups by year, i.e., the images captured in the same year are classified as the same group. The first classification rule corresponding to the location information may be that the plurality of images to be processed may be classified into different groups by provinces, i.e., the images captured in the same province are classified as the same group. The first classification rule corresponding to the person information may be that the images having the same person are classified as the same group. The first classification rule corresponding to the scene information may be that the plurality of images to be processed may be classified into different groups by a preset first scene. The preset first scene may be animal, plant, cate, building, landscapes, etc.

The computer device may classify the plurality of images to be processed according to the time information, the location information, the person information, and the scene information, respectively. After the first classification is performed on the plurality of images to be processed, the at least one first image set corresponding to the first classification may be acquired, and the computer device may display the at least one first image set on the interface of the computer device. In detail, the computer device may display the at least one first image set on an album interface.

At block 206, a second classification is performed on images in each of the at least one first image set based on a preset classification rule, to acquire at least one second image set corresponding to each of the at least one first image set.

After acquiring the at least one first image set corresponding to the first classification, the computer device may classify images in each of the at least one first image set based on a preset classification rule corresponding to the second classification. The computer device stores a classification rule corresponding to each type of information in the image information in advance. The classification rule corresponding to the first classification includes the classification rule corresponding to the second classification. The computer device may acquire a dimension of classifying the first image set, and perform the second classification on the first image set based on the same dimension. The computer device acquires the dimension of classifying, i.e., the computer device acquires one type of information for classify the images. The dimension of classifying may include a time dimension, a location dimension, a person dimension, and a scene dimension. For example, the first classification may be performed on the plurality of images to be processed based on the scene dimension to acquire an animal image set, a plant image set, a cate image set, a building image set, and a landscape image set. After the animal image set is acquired after the first classification, the computer device may acquire the second classification rule, i.e., the classification rule on the animal image set. The classification rule on the animal image set may be that, recognition is performed on one or more animals in each image to acquire a corresponding species of each animal, and a species image set may be established, such as a cat image set, a dog image set, and a fish image set. The second classification corresponding to the time dimension may be that the images may be classified by month. The second classification corresponding to the location dimension may be that the images may be classified by city.

In an embodiment, after acquiring the first image set of the first classification, the computer device may detect whether the number of images in the first image set exceeds a preset threshold. When the number of images in the first image set exceeds the preset threshold, the second classification may be performed on the first image set.

At block 208, the at least one second image set corresponding to each of the at least one first image set is displayed on an interface of a computer device.

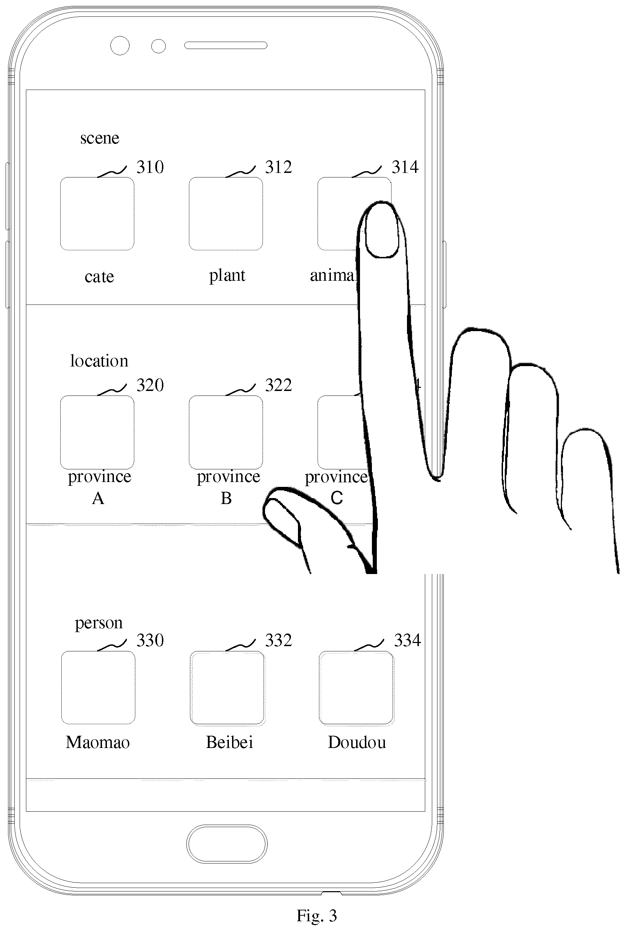

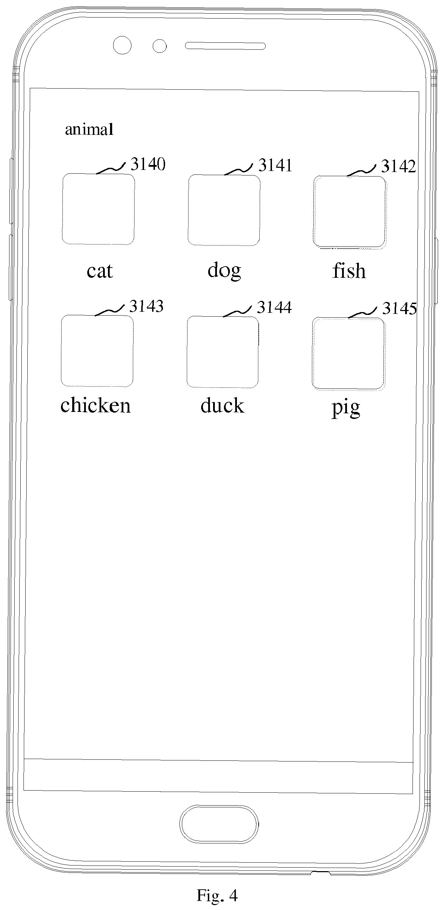

After the second classification, the at least one second image set corresponding to each of the at least one first image set is acquired, and the computer device may display the at least one second image set corresponding to each of the at least one first image set on the interface of the computer device. A cover image of the second image set is displayed on the interface of the computer device. The manner of displaying the at least one second image set may include: when the computer device receives a touch instruction applying on the cover image of the first image set, the interface is jumped to a new interface, and the at least one second image set corresponding to the first image set is displayed in the new interface. The computer device may further divide a display area for the first image set in the interface of the computer device, and display the at least one second image set corresponding to the first image set in the display area. As illustrated in Fig. 3, a cover image of the first image set is displayed on the interface of the computer device. The first image sets may include a cate image set 310, a plant image set 312, and an animal image set 314 based on the scene dimension; a province A image set 320 and a province B image set 322 based on the location dimension; and a Maomao (a person name) image set 330, a Beibei (a person name) image set 332, and a Doudou (a person name) image set 334 based on the person dimension. If the computer device receives a trigger operation on the cover image of the animal image set 314, the interface may jump to the second image sets corresponding to the animal image set 314. As illustrated in Fig. 4, the second image sets corresponding to the animal image set 314 in the interface of the computer device may include a cat image set 3140, a dog image set 3141, a fish image set 3142, a chicken image set 3143, a duck image set 3144, and a pig image set 3145.

With the method provided in the embodiments of the present disclosure, after the computer device performs the first classification on the images, the computer device may classify the classified images after the first classification again, i.e., the computer device performs the second classification on the at least one first image set. By classifying the images in multiple levels, the problem of a large number of images in the same image set and inconvenient browsing by the user is avoided. The multi-level classification is more detailed, which is beneficial for the user to view images in different categories.

In an embodiment, the at least one second image set corresponding to each of the at least one first image set is displayed on the interface of the computer device by at least one of the following manners.
(1) A number of images in each of the at least one second image set is acquired, and the at least one second image set is displayed in an ascending or descending order of the number of images.
(2) A total number of browsing times of each of the at least one second image set is acquired, and the at least one second image set is displayed in an ascending or descending order of the total number of browsing times.
(3) A modification time of each of the at least one second image set is acquired, and the at least one second image set is displayed in an order of the modification time from earliest to latest or from latest to earliest.

When the computer device displays a plurality of second image sets on the interface of the computer device, the plurality of second image sets may be displayed in different orders. The computer device may acquire the number of images in each of the plurality of second image sets, and display the plurality of second image sets in an ascending or descending order of the number of images. The computer device may also acquire the total number of browsing times of the images in each of the plurality of second image sets, that is, the sum of the numbers of browsing times of the images in each of the plurality of second image sets, and display the plurality of the second image sets in an ascending or descending order of the total number of browsing times. When the second image set is created, the computer device may record a creation moment of the second image set, and the creation moment is the original modification time. When the second image set is changed, the computer device may update the modification time of the second image set. For example, when the image is added into the second image set, the image is deleted from the second image set, or the keyword of the second image set is changed, the computer device may update the modification time of the second image set. The computer device may display the plurality of second image sets in an order of the modification time from earliest to latest or from latest to earliest.

With the method in the embodiments of the present disclosure, the plurality of second image sets are displayed in a certain order, and the manner of displaying the plurality of second image sets is intelligent and more suitable for user habits.

In an embodiment, displaying the at least one second image set corresponding to each of the at least one first image set on the interface of the computer device, may include the following. An image with the highest number of browsing times in each of the at least one second image set is acquired as a corresponding cover image, and the cover images is displayed on the interface of the computer device.

When the computer device displays the second image set on the album interface, the cover image of the second image set is displayed. The computer device may count the number of browsing times corresponding to each image in the second image set. Each time the computer device receives a click operation on the image, the number of browsing times corresponding to the image is increased by one. After acquiring the number of browsing times corresponding to each image in the second image set, the computer device may search for the image with the highest number of browsing times in the second image set, and take the image with the highest number of browsing times as the cover image of the second image set. That is, when the computer device displays the second image set on the interface of the computer device, the image with the highest number of browsing times in the second image set is displayed. When a plurality of images with the highest number of browsing times exist in the second image set, the computer device may acquire a resolution of each of the plurality of images with the highest number of browsing times and select the image with the highest resolution as the cover image.

With the method provided in the embodiments of the present disclosure, the image with the highest number of browsing times in the second image set is acquired as the cover image of the second image set. That is, the image most viewed by the user is acquired as the cover image of the second image set, and the way of displaying the second image set is more personalized.

In an embodiment, a keyword corresponding to each of the at least one second image set may be displayed on the interface of the computer device. After the action in block 208, the method further includes actions in the following blocks.

At block 210, an image search instruction is received, and a search term is extracted from the image search instruction.

At block 212, matching of the search term and the keyword is performed, and when the search term matches the keyword, images in a second image set corresponding to the keyword are displayed on the interface of the computer device.

When displaying the second image sets, the computer device may also display keywords corresponding to the second image sets. For example, the displayed keyword corresponding to the cat image set is cat, and the displayed keyword corresponding to the dog image set is dog. The computer device may also receive the search instruction for the stored images. The search instruction for the stored images may be entered in an album application, or in a search field of the computer device system. The search instruction may be a text instruction or a speech instruction. When the search instruction is the text instruction, the computer device may directly extract a search word from the text instruction as the search term; when the search instruction is the speech instruction, the computer device may convert the speech instruction into text information, and extract a search word from the text information as the search term. The computer device may perform matching on the search term with the keyword corresponding to the at least one second image set. If the search term matches a keyword corresponding to a second image set, the interface of the computer device may jump to the album interface, and display the images in the matched second image set in the album interface. For example, if the computer device receives the text instruction "photo cat" input in the search field of the computer device system, the computer device extracts "photo" from the instruction to acquire the search instruction for the stored images. The computer device searches for the second image set "the cat image set" corresponding to the search word "cat", and the interface of the computer device jumps to the album interface and all the images in "the cat image set" are displayed in the album interface.

In an embodiment, the computer device may also display the cover image of the second image set in the interface of the search field, and if the trigger operation on the cover image is acquired, the images in the second image set are displayed or it jumps to the album interface to display the images in the second image set.

With the method in the embodiments of the present disclosure, the computer device may search for a corresponding image in the stored images according to the received search instruction, and display the corresponding image on the interface of the computer device. That is, the user may search for the image according to the search, thereby avoiding inconvenience of the user to search for the image by browsing the images when the number of images is large, and improving efficiency of the user in finding the image.

In an embodiment, after the action in block 208, the method further includes actions in the following blocks.

At block 214, a first dimension for performing the first classification on the plurality of images to be processed is acquired.

At block 216, a second dimension is selected from a preset dimension set. The second dimension is different from the first dimension.

The computer device may acquire the first dimension for performing the first classification on the plurality of images to be processed. After the first dimension is acquired, the second dimension that is different from the first dimension may be acquired. The first dimension being different from the second dimension, may include the following. The second dimension is selected from the preset dimension set, in which the type of the first dimension is different from the type of the second dimension. Or, the second dimension is selected from the preset dimension set, in which, a type of the first dimension is same with a type of the second dimension, and a clustering precision of the first dimension is different from a clustering precision of the second dimension.

The dimensions may be divided into different types, which may include: a scene dimension, a time dimension, a location dimension, and a person dimension. The computer device may set sub dimensions under the same type of dimension. For example, the time dimension may include: year, month, day, hour, minute, and second, i.e., year, month, day, hour, minute, and second are the sub dimensions belonging to the time dimension. The location dimension may include: continent, country, province, city, district, street, etc., i.e., continent, country, province, city, district, and street are the sub dimensions belonging to the location dimension. The scene dimension may include: cate, building, animal, flower, etc., i.e., cate, building, animal, and flower are the sub dimensions belonging to the scene dimension. Each sub dimension of the same type of dimension has different precision for image clustering.

When selecting the second dimension, the computer device may select the second dimension that has the different type with the first dimension. For example, if the first dimension is "month" in the time dimension, the computer device may select "province" in the location dimension as the second dimension. The computer device may also select a sub dimension that is different with the first dimension but in the same type with the first dimension. For example, the first dimension is "year" in the time dimension, and the second dimension may be "month" in the time dimension.

Each sub dimension u the same type of dimension has different precision for image clustering. The computer device may set an inclusion relationship of each sub dimension according to the clustering precision. A sub dimension with lower clustering precision contain a sub dimension with higher clustering precision. When the second dimension is acquired by the computer device, if the second dimension and the first dimension belong to the same type, the clustering precision of the second dimension is higher than the clustering precision of the first dimension. For example, in the time dimension, the precisions of year, month, day, hour, minute, and second are sequentially increased. If the first dimension is "month", the second dimension may be "day", "hour", "minute", or "second". Generally, a high-precision dimension adjacent to the first dimension may be selected as the second dimension. For example, if the first dimension is "month", "day" is selected as the second dimension.

According to the second dimension different from the first dimension, the computer device may perform the second classification on the images in the first image set to obtain at least one sub image set of the first image set.

With the method in the embodiments of the present disclosure, the multi-level classification may be performed on the images by using the cross dimensions, which may avoid the situation that the images are classified by a single dimension when the number of images is large. By cross-dimension classification, the classification of images is more detailed, and the category standard of image processing is more accurate.

In an embodiment, after the action in block 208, the method further includes actions in the following blocks.

At block 218, when the second image set is a face image set, face recognition is performed on each image in the second image set to acquire a face in each image in the second image set.

At block 220, when a number of images having a plurality of same faces exceeds a second threshold, the image having the plurality of same faces are clustered into a third image set.

When the second image set is a face image set, that is, the computer device classifies the images by the person dimension to acquire the second image set, the computer device may recognize the face and the face identifier corresponding to the face included in each image in the face image set. The computer device may acquire the face identifiers corresponding to the faces and the faces included in the images in the entire face image set. The computer device may obtain an intersection set of the face identifiers contained in the plurality of images, i.e., the face identifiers shared by the plurality of images (i.e., the face exists in the plurality of images). If the computer device detects that the number of images having two faces or two or more faces exceeds more than a preset second threshold, the images having the two faces or two or more faces may be formed into a third image set, i.e., a set of images including the plurality of faces. For example, in the second image set, if there are 15 images including both the face A and the face B, the computer device may cluster the 15 images including the face A and the face B into the third image set.

With the method provided in the embodiments of the present disclosure, when the images are classified by the person dimension, in addition to clustering based on the single face, the images with the plurality of faces may be clustered, and the way of classifying the face images is more diverse.

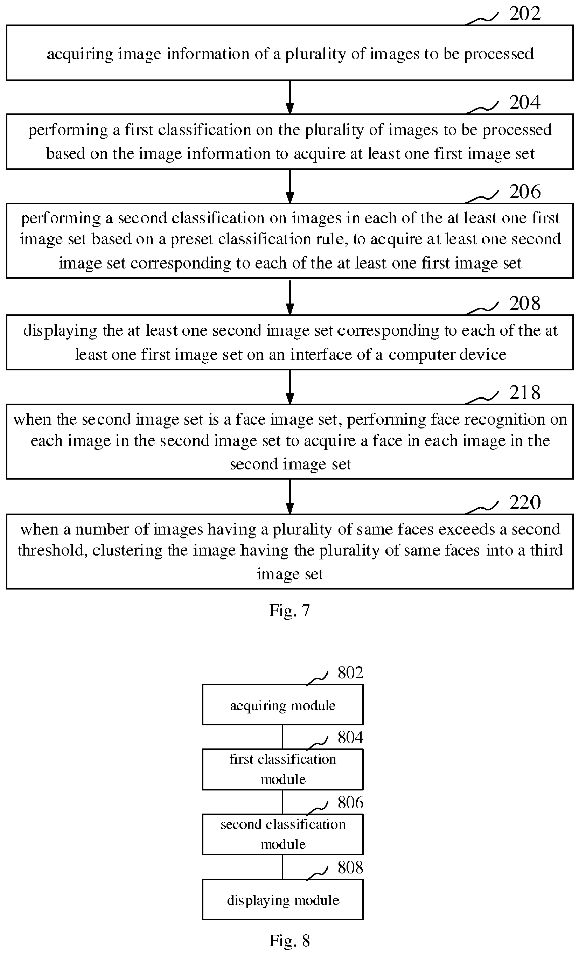

Fig. 8 is a block diagram illustrating an image processing device according to an embodiment of the present disclosure. As illustrated in Fig. 8, the image processing device includes an acquiring module 802, a first classification module 804, a second classification module 806 and a displaying module 808.

The acquiring module 802 is configured to acquire image information of a plurality of images to be processed. The image information includes at least one of time information, location information, person information, and scene information.

The first classification module 804 is configured to perform a first classification on the plurality of images to be processed based on the image information to acquire at least one first image se.

The second classification module 806 is configured to perform a second classification on images in each of the at least one first image set based on a preset classification rule, to acquire at least one second image set corresponding to each of the at least one first image set.

The displaying module 808 is configured to display the at least one second image set corresponding to each of the at least one first image set on an interface of a computer device.

In an embodiment, the displaying module 808 displays at least one second image set corresponding to each of the at least one first image set on the interface of the computer device by at least one of the following manners.
(1) A number of images in each of the at least one second image set is acquired, and the at least one second image set is displayed in an ascending or descending order of the number of images.
(2) A total number of browsing times of each of the at least one second image set is acquired, and the at least one second image set is displayed in an ascending or descending order of the total number of browsing times.
(3) A modification time of each of the at least one second image set is acquired, and the at least one second image set is displayed in an order of the modification time from earliest to latest or from latest to earliest.

In an embodiment, the displaying module 808 display the at least one second image set corresponding to each of the at least one first image set on the interface of the computer device by the following. An image with the highest number of browsing times in each of the at least one second image set is acquired as a corresponding cover image, and the cover images is displayed on the interface of the computer device.

In an embodiment, the second classification module 806 is configured to acquire a first dimension for performing the first classification on the plurality of images to be processed and select a second dimension from a preset dimension set. The second dimension is different from the first dimension.

In an embodiment, the first dimension being different from the second dimension, may include the following. The second dimension is selected from the preset dimension set, in which the type of the first dimension is different from the type of the second dimension. Or, the second dimension is selected from the preset dimension set, in which, a type of the first dimension is same with a type of the second dimension, and a clustering precision of the first dimension is different from a clustering precision of the second dimension.

In an embodiment, the second classification module 806 is configured to, when the second image set is a face image set, perform face recognition on each image in the second image set to acquire a face in each image in the second image set. When a number of images having a plurality of same faces exceeds a second threshold, clustering the image having the plurality of same faces into a third image set.

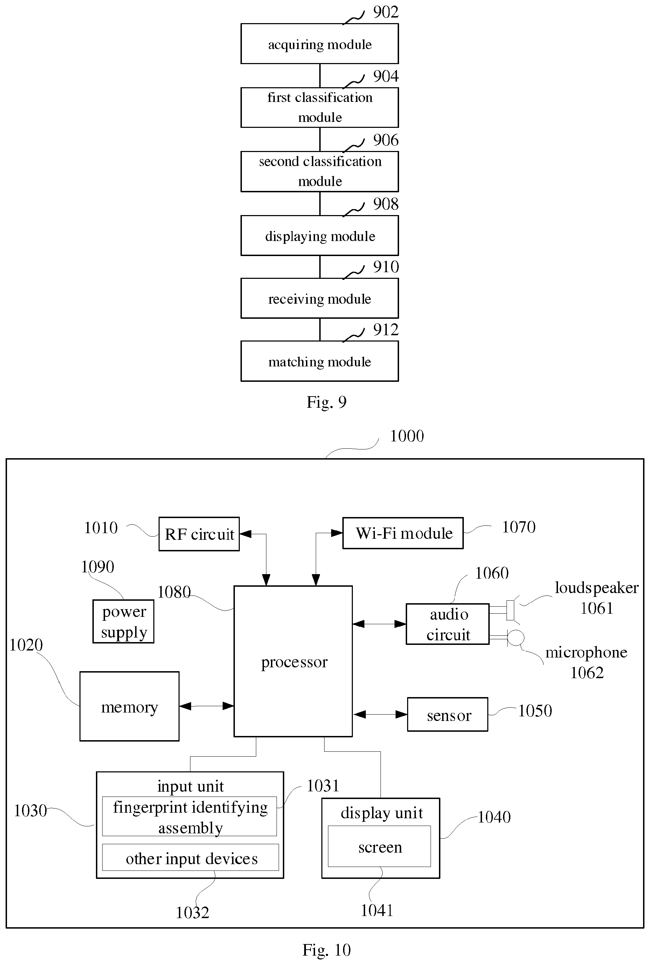

Fig. 9 is a block diagram illustrating an image processing device according to another embodiment of the present disclosure. As illustrated in Fig. 9, the image processing device includes an acquiring module 902, a first classification module 904, a second classification module 906, a displaying module 908, a receiving module 910 and a matching module 912. The acquiring module 902, the first classification module 904, the second classification module 906, and the displaying module 908 are same with the corresponding modules in Fig. 8.

The displaying module 908 is configured to display a keyword corresponding to each of the at least one second image set on the interface of the computer device.

The receiving module 910 is configured to receive an image search instruction and extract a search term from the image search instruction.

The matching module 912 is configured to perform matching of the search term and the keyword.

The displaying module 908 is further configured to, when the search term matches the keyword, display images in a second image set corresponding to the keyword on the interface of the computer device.

The division of each module in the above image processing device is for illustrative purposes only. In other embodiments, the image processing device may be divided into different modules as needed to complete all or part of the functions of the image processing device.

An embodiment of the present disclosure further provides a computer readable storage medium. A non-transitory computer readable storage medium includes one or more computer executable instructions. When the one or more computer executable instructions are executed by one or more processors, the one or more processors is configured to carry out the following actions:
(1) acquiring image information of a plurality of images to be processed, the image information including at least one of time information, location information, person information, and scene information;
(2) performing a first classification on the plurality of images to be processed based on the image information to acquire at least one first image set;
(3) performing a second classification on images in each of the at least one first image set based on a preset classification rule, to acquire at least one second image set corresponding to each of the at least one first image set; and
(4) displaying the at least one second image set corresponding to each of the at least one first image set on an interface of a computer device.

In an embodiment, displaying the at least one second image set corresponding to each of the at least one first image set on the interface of the computer device, includes at least one of:
(1) acquiring a number of images in each of the at least one second image set, and displaying the at least one second image set in an ascending or descending order of the number of images; or
(2) acquiring a total number of browsing times of each of the at least one second image set, and displaying the at least one second image set in an ascending or descending order of the total number of browsing times; or
(3) acquiring a modification time of each of the at least one second image set, and displaying the at least one second image set in an order of the modification time from earliest to latest or from latest to earliest.

In an embodiment, displaying the at least one second image set corresponding to each of the at least one first image set on the interface of the computer device, includes: acquiring an image with the highest number of browsing times in each of the at least one second image set as a corresponding cover image, and displaying the cover images on the interface of the computer device.

In an embodiment, following actions may be executed: displaying a keyword corresponding to each of the at least one second image set on the interface of the computer device; receiving an image search instruction; extracting a search term from the image search instruction; performing matching of the search term and the keyword; and when the search term matches the keyword, displaying images in a second image set corresponding to the keyword on the interface of the computer device.

In an embodiment, performing the second classification on the images in each of the at least one first image set based on the preset classification rule, to acquire the at least one second image set corresponding to each of the at least one first image set, include: acquiring a first dimension for performing the first classification on the plurality of images to be processed; selecting a second dimension from a preset dimension set, the second dimension being different from the first dimension; and performing the second classification on the images in each of the at least one first image set based on the second dimension.

In an embodiment, selecting the second dimension from the preset dimension set, includes: selecting the second dimension from the preset dimension set, wherein a type of the first dimension is different from a type of the second dimension; or selecting the second dimension from the preset dimension set, wherein a type of the first dimension is same with a type of the second dimension, and a clustering precision of the first dimension is different from a clustering precision of the second dimension.

In an embodiment, following actions may be executed: when the second image set is a face image set, performing face recognition on each image in the second image set to acquire a face in each image in the second image set; and when a number of images having a plurality of same faces exceeds a second threshold, clustering the image having the plurality of same faces into a third image set.

A computer program product is provided. When the computer program product is executed in the computer, the computer is configured to carry out the following actions.
(1) acquiring image information of a plurality of images to be processed, the image information including at least one of time information, location information, person information, and scene information;
(2) performing a first classification on the plurality of images to be processed based on the image information to acquire at least one first image set;
(3) performing a second classification on images in each of the at least one first image set based on a preset classification rule, to acquire at least one second image set corresponding to each of the at least one first image set; and
(4) displaying the at least one second image set corresponding to each of the at least one first image set on an interface of a computer device.

In an embodiment, displaying the at least one second image set corresponding to each of the at least one first image set on the interface of the computer device, includes at least one of:
(1) acquiring a number of images in each of the at least one second image set, and displaying the at least one second image set in an ascending or descending order of the number of images; or
(2) acquiring a total number of browsing times of each of the at least one second image set, and displaying the at least one second image set in an ascending or descending order of the total number of browsing times; or
(3) acquiring a modification time of each of the at least one second image set, and displaying the at least one second image set in an order of the modification time from earliest to latest or from latest to earliest.

In an embodiment, displaying the at least one second image set corresponding to each of the at least one first image set on the interface of the computer device, includes: acquiring an image with the highest number of browsing times in each of the at least one second image set as a corresponding cover image, and displaying the cover images on the interface of the computer device.

In an embodiment, following actions may be executed: displaying a keyword corresponding to each of the at least one second image set on the interface of the computer device; receiving an image search instruction; extracting a search term from the image search instruction; performing matching of the search term and the keyword; and when the search term matches the keyword, displaying images in a second image set corresponding to the keyword on the interface of the computer device.

In an embodiment, performing the second classification on the images in each of the at least one first image set based on the preset classification rule, to acquire the at least one second image set corresponding to each of the at least one first image set, include: acquiring a first dimension for performing the first classification on the plurality of images to be processed; selecting a second dimension from a preset dimension set, the second dimension being different from the first dimension; and performing the second classification on the images in each of the at least one first image set based on the second dimension.

In an embodiment, selecting the second dimension from the preset dimension set, includes: selecting the second dimension from the preset dimension set, wherein a type of the first dimension is different from a type of the second dimension; or selecting the second dimension from the preset dimension set, wherein a type of the first dimension is same with a type of the second dimension, and a clustering precision of the first dimension is different from a clustering precision of the second dimension.

In an embodiment, following actions may be executed: when the second image set is a face image set, performing face recognition on each image in the second image set to acquire a face in each image in the second image set; and when a number of images having a plurality of same faces exceeds a second threshold, clustering the image having the plurality of same faces into a third image set.

Embodiments of the present disclosure provide a computer device, illustrated as Fig. 10. For simplification of illustration, portions related to embodiments of the present disclosure are merely illustrated. For those details not disclosed, method embodiments of the present disclosure may be referred to. The computer device may include a phone, a tablet computer, a personal digital assistant (PDA), a point of sales (POS), an on-board computer, a wearable device or any other terminal device. The phone is taken as an example for illustrating.

Fig. 10 is a block diagram illustrating partial structures of a phone related to a computer device provided in embodiments of the present disclosure. With reference to Fig. 10, the phone includes a radio frequency (RF) circuit 1010, a memory 1020, an input unit 1030, a display unit 1040, a sensor 1050, an audio circuit 1060, a wireless fidelity (Wi-Fi) module 1070, a processor 1080 and a power supply 1090. It may be understood by those skilled in the art that, the structures illustrated in Fig. 8 do not limit the structures of the phone. The phone may include less or more components than those illustrated in Fig. 8 or combinations thereof, or have a different arrangement of components.

Each components of the phone will be described in detail in combination with Fig. 8.

The RF circuit 1010 may be configured to receive or transmit messages. In general, the RF circuit 1010 includes but is not limited to an antenna, at least one amplifier, a transceiver, a coupler, a low noise amplifier (LNA), a diplexer and the like. Furthermore, the RF circuit 1010 may be further configured to communicate with other devices via wireless communication and network. The above wireless communication may adopt any one of communication standards or protocols, including but not being limited to global system of mobile communication (GSM), general packet radio service (GPRS), code division multiple access (CDMA), wideband code division multiple access (WCDMA), long term evolution (LTE), e-mail, short messaging service (SMS) and the like.

The memory 1020 may be configured to store software programs or modules. The processor 1080 is configured to execute various functional applications and data processes of the phone by running the software programs and modules stored in the memory 1020. The memory 1020 may include a program storage region and a data storage region. The program storage region may store an operation system, at least one function required applications and the like. The data storage region may store data produced by using the phone (such as N frequencies corresponding to N light sources, an importance priority of an application i and so on) and the like. In addition, the memory 1020 may include a high speed random access memory and may include a non-volatility memory, such as at least one disk memory, a flash memory, or other volatility solid state memory.

The input unit 1030 may be configured to receive figures or character information inputted and to generate a key-signal input related to a user setup or function control of the phone. In detail, the input unit 1030 may include a fingerprint sensor 1031 and other input devices 1032. The fingerprint sensor 1031 may be configured to capture fingerprint data thereon. In addition the fingerprint sensor 1031, the input unit 1030 may further include the other input devices 1032. In detail, the other input devices 1032 may include but not limited to one or more of a touch screen, a physical keyboard, a functional key (such as a volume control key, a switch key and the like), a tracking boll, a mouse, an operation lever.

The display unit 1040 may be configured to display information inputted by the user or information provided to the user or various menus of the phone. The display unit 1040 may include a display screen 1041. Alternatively, the display screen 1041 may be configured as a liquid crystal display (LCD), an organic light-emitting diode (OLED) and the like. Although, the fingerprint sensor 1031 and the display screen 1041 are two separate components to realize an input function and an output function of the phone illustrated in Fig. 8, in certain embodiments, the fingerprint sensor 1031 and the display screen 1041 may be integrated to realize the input function and the output function of the phone.

The phone may further include at least one sensor 1050, such as an optical sensor, a motion sensor and other sensors. In detail, the optical sensor may include a surrounding light sensor and a proximity sensor. The surrounding light sensor may adjust a luminance of the display screen 1041 based on the luminance of surrounding lights. The proximity sensor may close the display screen 1041 and/or backlight units when the phone moves near ears of the user. As the motion sensor, an acceleration sensor may be configured to measure acceleration values in various directions (generally in three axes), measure a value and a direction of gravity when the phone is static, and identify the phone gesture applications (such as horizontal and vertical screen switching, related games, magnetometer attitude calibration), identify, based on vibration, related functions (such as pedometer, percussion), and the like. For other configurable sensors such as gyroscope, barometer, humidity meter, thermometer, infrared sensors, they are not elaborated in embodiments of the present disclosure.

The audio circuit 1060, a loudspeaker 1061 and a microphone 1062 may provide an audio interface between the user and the phone. The audio circuit 1060 may transmit electrical signals converted from received audio data to the loudspeaker 1061. The loudspeaker 1061 converts the electrical signals to sound signals and outputs the sound signals. In another aspect, the microphone 1062 may convert collected sound singles to electrical signals. The audio circuit 1060 receives and converts the electrical signals to audio data and outputs the audio data to the processor 1080 to be processed. The audio data processed by the processor 1080 may be transmitted to for example another phone via the RF circuit 1010 or may be stored in the memory 1020 for subsequently processing.

Wi-Fi is a short distance wireless communication technology. The phone may help the user to receive or send an e-mail, search webpages, access stream medium via the Wi-Fi module 1070. The Wi-Fi module 1070 provides a wireless broadband Internet access. Although the Wi-Fi module 1070 is illustrated in Fig. 10, it may be understood that, the Wi-Fi module 1070 is not necessary for the phone, thus it may be omitted based on demands without changing the scope of the present disclosure.

The processor 1080 is a control center of the phone, utilizing various interfaces and wires to connect various parts of the phone. By running or executing the software program and/or modules stored in the memory 1020, and by invoking data stored in the memory 1020, the various functions and data processing functions may be executed, thus the phone may be integrally monitored. Alternatively, the processor 1080 may include one or more processing units. Alternatively, the processor 1080 may be integrated with an application processor or a modem processor. The application processor processes the operation system, a user interface and applications. The modem processor processes wireless communication. It may be understood that, the above modem controller may be not integrated in the processor 1080.

The phone may further include a power supply 1090 (such as a battery) for providing powers to various parts of the phone. Alternatively, the power supply may be logically connected to processor 1080 via a power management system, thereby managing a charging, discharging and power consumption via the power management system.

Although not illustrated, the phone may further include a camera, a Bluetooth module and the like, which are not elaborated herein.

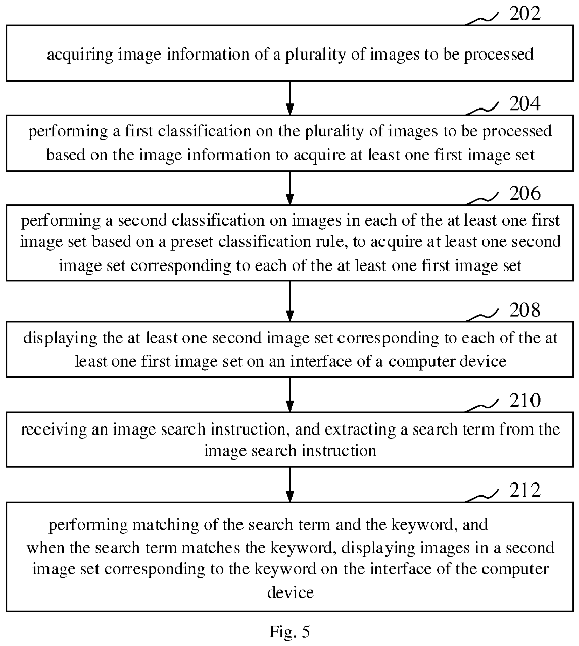

In embodiments illustrated as Fig. 5, the flow chart may be executed based on the structure of the phone illustrated as Fig. 8.

In embodiments illustrated as Fig. 7, functions of modules may be realized based on the structure of the phone illustrated as Fig. 8.

Embodiments of the present disclosure further provide a computer storage medium. In the computer storage medium, computer storages for exchanging electrical data are stored. The computer programs are configured to cause a computer to execute parts of or all of the method for capturing a fingerprint described in any one of embodiments of the present disclosure.

Embodiments of the present disclosure further provide a computer program product. The computer program product includes a non-transitory computer readable storage medium storing computer programs. The computer programs are executable to cause a computer to execute parts of or all of the method for capturing a fingerprint described in any one of embodiments of the present disclosure. The computer program product may be a software installation package.

It may be illustrated that, for foregoing described method embodiments, for the sake of brief description, all of the method embodiments are described as a series of operation combinations. However, those skilled in the art should understand that the present disclosure is not limited to a described sequence of operations, because some blocks may be performed in other sequences or concurrently according to the present disclosure. Secondly, those skilled in the art should also know that embodiments described in the specification belong to preferred embodiments, and actions and modules involved are not necessarily required by the present disclosure.

In above embodiments, different emphasis is made to descriptions of embodiments. For those not described in detail in embodiments, reference may be made to related descriptions in other embodiments.

In the embodiments provided in the present application, it should be understood that the disclosed device may be implemented in other manners. For example, the device embodiments described above are merely exemplary. For example, the unit division is merely a logical function division and may be other division in actual implementation. For example, a plurality of units or components may be combined or may be integrated into another system, or some features may be ignored or not executed. In addition, illustrated or discussed mutually coupling or directly coupling or communicational connection may be indirectly coupling or communicational connection through interfaces, devices or units, and may be electrically coupling or in other forms.

Units described as separate components may be or may not be physically separated. Components displayed as units may be or may not be physical units, that is, they may be located in a same position or may also be distributed to multiple network units. Some or all of the units may be selected based on actual needs to achieve the objectives of solutions in embodiments of the present disclosure.

In addition, each functional unit in each embodiment of the present disclosure may be integrated into one processing unit, or each unit may exist alone physically, or two or more units may be integrated in one unit. The above-mentioned integrated units may be implemented in a form of hardware or in a form of software functional unit.

The integrated unit, if implemented in the form of a software functional unit and sold or used as an independent product, may be stored in a computer readable memory. Based on this understanding, the technical solution of the present disclosure essentially, or the part contributing to the prior art, or all or part of the technical solution may be embodied in the form of software product stored in the memory, including several instructions for enabling a computer device (which may be a personal computer, a server, a network device or the like) to perform all or part of blocks of the method provided in embodiments of the present disclosure. The foregoing memory includes various media capable of storing program codes, such as a USB flash disk, a read-only memory (ROM), a random access memory (RAM), a removable hard disk, a magnetic disk, an optical disk or the like.

Those skilled in the art should understand that all or part of the blocks in the methods in embodiments may be implemented by a program instructing relevant hardware. The program may be stored in a computer readable memory. The computer readable memory may include a flash drive, a read-only memory (ROM), a random access memory (RAM), a magnetic disk, an optical disk or the like.

Embodiments of the present disclosure are described in detail above. Specific examples are used herein to describe the principles and implementation manners of the present disclosure. The description of the above embodiments is merely used to help understand the method and key idea of the present disclosure. Meanwhile, those skilled in the art may make modifications to the detailed description and application scopes according to ideas of the present disclosure. In view of the above descriptions, the specification should not be construed as limiting the present disclosure.

## Claims

1. An image processing method, comprising:
acquiring (202) image information of a plurality of images to be processed, the image information comprising at least one of time information, location information, person information, and scene information;
performing (204) a first classification on the plurality of images to be processed based on the image information to acquire at least one first image set;
performing (206) a second classification on images in each of the at least one first image set based on a preset classification rule, to acquire at least one second image set corresponding to each of the at least one first image set; and
displaying (208) the at least one second image set corresponding to each of the at least one first image set on an interface of a computer device.

2. The method of claim 1, wherein, displaying (208) the at least one second image set corresponding to each of the at least one first image set on the interface of the computer device, comprises at least one of:
acquiring a number of images in each of the at least one second image set, and displaying the at least one second image set in an ascending or descending order of the number of images; or
acquiring a total number of browsing times of each of the at least one second image set, and displaying the at least one second image set in an ascending or descending order of the total number of browsing times; or
acquiring a modification time of each of the at least one second image set, and displaying the at least one second image set in an order of the modification time from earliest to latest or from latest to earliest.

3. The method of claim 1 or 2, wherein, displaying (208) the at least one second image set corresponding to each of the at least one first image set on the interface of the computer device, comprises:
acquiring an image with the highest number of browsing times in each of the at least one second image set as a corresponding cover image, and displaying the cover images on the interface of the computer device.

4. The method of any one of claims 1 to 3, further comprising:
displaying a keyword corresponding to each of the at least one second image set on the interface of the computer device;
receiving (210) an image search instruction;
extracting (210) a search term from the image search instruction;
performing (212) matching of the search term and the keyword; and
when the search term matches the keyword, displaying (212) images in a second image set corresponding to the keyword on the interface of the computer device.

5. The method of any one of claims 1 to 4, wherein, performing (208) the second classification on the images in each of the at least one first image set based on the preset classification rule, to acquire the at least one second image set corresponding to each of the at least one first image set, comprises:
acquiring (214) a first dimension for performing the first classification on the plurality of images to be processed;
selecting (216) a second dimension from a preset dimension set, the second dimension being different from the first dimension; and
performing the second classification on the images in each of the at least one first image set based on the second dimension.

6. The method of claim 5, wherein, selecting (214) the second dimension from the preset dimension set, comprises:
selecting the second dimension from the preset dimension set, wherein a type of the first dimension is different from a type of the second dimension; or
selecting the second dimension from the preset dimension set, wherein a type of the first dimension is same with a type of the second dimension, and a clustering precision of the first dimension is different from a clustering precision of the second dimension.

7. The method of any one of claims 1 to 6, further comprising:
when the second image set is a face image set, performing (218) face recognition on each image in the second image set to acquire a face in each image in the second image set; and
when a number of images having a plurality of same faces exceeds a second threshold, clustering (220) the image having the plurality of same faces into a third image set.

8. An image processing device, comprising:
an acquiring module (802; 902), configured to acquire image information of a plurality of images to be processed, the image information comprising at least one of time information, location information, person information, and scene information;
a first classification module (804; 904), configured to perform a first classification on the plurality of images to be processed based on the image information to acquire at least one first image set;
a second classification module (806; 906), configured to perform a second classification on images in each of the at least one first image set based on a preset classification rule, to acquire at least one second image set corresponding to each of the at least one first image set; and
a displaying module (808; 908), configured to display the at least one second image set corresponding to each of the at least one first image set on an interface of a computer device.

9. The device of claim 8, wherein, the displaying module (808; 908) is configured to display the at least one second image set corresponding to each of the at least one first image set on the interface of the computer device, by actions of:
acquiring a number of images in each of the at least one second image set, and displaying the at least one second image set in an ascending or descending order of the number of images; or
acquiring a total number of browsing times of each of the at least one second image set, and displaying the at least one second image set in an ascending or descending order of the total number of browsing times; or
acquiring a modification time of each of the at least one second image set, and displaying the at least one second image set in an order of the modification time from earliest to latest or from latest to earliest.

10. The device of claim 8 or 9, wherein, the displaying module (808; 908) is configured to display the at least one second image set corresponding to each of the at least one first image set on the interface of the computer device, by actions of:
acquiring an image with the highest number of browsing times in each of the at least one second image set as a corresponding cover image, and displaying the cover images on the interface of the computer device.

11. The device of any one of claims 8 to 10, wherein the displaying module (808; 908) is configured to display a keyword corresponding to each of the at least one second image set on the interface of the computer device, and the device further comprises:
a receiving module (910), configured to receive an image search instruction, and extract a search term from the image search instruction;
a matching module (912), configured to perform matching of the search term and the keyword,
wherein the displaying module (808; 908) is further configured to, when the search term matches the keyword, display images in a second image set corresponding to the keyword on the interface of the computer device.

12. The device of any one of claims 8 to 11, wherein, the second classification module (806; 906) is configured to perform the second classification on the images in each of the at least one first image set based on the preset classification rule, to acquire the at least one second image set corresponding to each of the at least one first image set, by actions of:
acquiring a first dimension for performing the first classification on the plurality of images to be processed;
selecting a second dimension from a preset dimension set, the second dimension being different from the first dimension; and
performing the second classification on the images in each of the at least one first image set based on the second dimension.

13. The device of claim 12, wherein, selecting the second dimension from the preset dimension set, comprises:
selecting the second dimension from the preset dimension set, wherein a type of the first dimension is different from a type of the second dimension; or
selecting the second dimension from the preset dimension set, wherein a type of the first dimension is same with a type of the second dimension, and a clustering precision of the first dimension is different from a clustering precision of the second dimension.

14. The device of any one of claims 8 to 13, wherein the device is further configured to:
when the second image set is a face image set, perform face recognition on each image in the second image set to acquire a face in each image in the second image set; and
when a number of images having a plurality of same faces exceeds a second threshold, cluster the image having the plurality of same faces into a third image set.

15. A computer readable storage medium having stored computer programs thereon, wherein when the computer programs are executed by a processor, the method according to any one of claims 1 to 7 is implemented.
